# EUROPEAN PATENT APPLICATION

(11) **EP 4 052 785 A1**
(43) Date of publication of application: **07.09.2022**
(21) Application number: 21160756.9
(22) Date of filing: 04.03.2021
(51) Int. Cl.: B01J 8/00, B01J 8/18, B01J 8/38

(54) **APPARATUS FOR GENERATING A FLUIDIZED BED**

(71) Applicant: Universiteit Antwerpen, 2000 Antwerpen (BE)
(72) Inventor: PERREAULT, Patrice, 2018 Antwerpen (BE)
(74) Representative: IPLodge bv

(57) **Abstract**

The present disclosure relates to an apparatus for generating a fluidized bed comprising solid particles mixed with a fluid. The apparatus comprises a fluidization compartment wherein a bottom side comprises a fluid distributor for distributing a fluid into the fluidization compartment and wherein an upper side comprises an opening. The apparatus further comprises a fluid supply compartment configured for supplying the fluid to be distributed by the fluid distributor, and a disengagement compartment comprising a bottom side having an opening matching or at least partly matching with the opening of the upper side of the fluidization compartment such that fluid can flow from the fluidization compartment to the disengagement compartment. The apparatus is characterized in that the fluidization compartment is rotatably mounted with respect to the fluidization compartment and with respect to the disengagement compartment such that the fluidization compartment is rotatable around a central axis while the fluid supply compartment and the disengagement compartment remain stationary.

## Description

### Field of the disclosure

The present disclosure relates to an apparatus for generating a fluidized bed comprising solid particles mixed with a fluid.

### Background

Fluidized bed technology is used in industry for various applications involving contact and interaction between fluids and solids. Generally, in a fluidized bed comprising fluid and solid particles, a drag force is counterbalancing a gravity force such that the solid particles are suspended in the fluid and are vigorously mixed.

Examples of applications wherein fluidized beds are used in the chemical industry are Fluid Catalytic Cracking (FCC), chemical looping combustion (CLC), ore reductions, solid fuel combustion and regeneration, coal gasification, FischerTropsch synthesis and polyethylene production.

One of the problems with the fluidized bed technology is the handling of small particles in chemical processes, especially in gas-solid applications. Small size particles, i.e. particles with diameter below approximately 30 micrometres, can hardly be fluidized. Indeed, as the gravity force is proportional to the particle diameter, the drag force which has to counterbalance the gravity force is too low and interparticle forces dominate. Such small particles are identified as "Geldart C" in the fluidization literature.

Fluidization attempts of such small particles result in moving "slugs", i.e. large chunks of particles travel upward as a single block, and hence very poor contact between the reactant gas and the solids, either a catalyst or a solid-phase reactant. The chunks finally collapse and fall back or are plainly being entrained out of the reactor. Generally, defluidization is observed, for example resulting from channelling, also named generation of "rat holes".

On the other hand, from an engineering point of view, these small particles are optimal for both catalytic and non-catalytic applications, both reactive and non-reactive. Due to their small size, internal heat and mass transfer is maximal, e.g. offering minimal drying times for non-reactive applications. Also, by eliminating heat and mass transfer for reactive and catalytic reactions, the reaction time becomes minimal, thus requiring a minimal reaction vessel volume for a giving output, and so minimising capital expenditures.

A further problem with fluidized bed technology is that since solid particles used in fluidized beds experience a continuous size reduction over time because of attrition, due to particle-particle and particle-walls collisions. In addition, repeated oxidation and reduction cycles, e.g. in CLC, inherently lead to size reduction due to the repeated swelling and shrinking (density differences). Those reduced particles are normally collected in cyclones and considered as waste. Hence, there is also a need to increase the life-time of catalyst and solid particles, leading to reduced waste production and increased operation time.

An example of an apparatus for generating a fluidized bed is the commercial reactor system developed by Torftech Limited and is named the "TORBED" reactor. The TORBED reactor can however only process fine particles in a flash processing mode, i.e. with particle retention times of often less than 50 milliseconds.

A known apparatus for generating a fluidization bed is the Swirling Fluidized Bed reactor (SFB) wherein a swirling motion is imparted. Typically, such an apparatus comprises a fluidization compartment wherein, when in operation, the fluidization bed is making a swirling motion. The bottom side of the fluidization compartment comprises a fluid distributor for distributing the fluid into the fluidization compartment. Generally, the fluid distributor is configured such that a velocity of the fluid entering the fluidization compartment has a tangential velocity component resulting in a swirling motion of the fluidization bed.

However, a problem with these SFB reactors is that a high volume flow of fluid is required, especially in combination with small particles, to be able to generate the swirling motion. Further, the reactor generally needs a specific superficial velocity to maintain the swirling bed motion.

Another disadvantage of SFB is that the tangential component of the fluid velocity rapidly decreases with height, and as a consequence, the swirling component extinguishes rapidly with height, and the bed behaves as a conventional fluidized bed, making it impossible to fluidize Geldart C particles.

Hence there is room for improving apparatuses for generating fluidized beds, especially fluidized beds for use with small solid particles.

### Summary

It is an object of the present disclosure to provide an apparatus for generating a fluidized bed wherein the life time for solid particles is increased when compared to currently known fluidized bed reactors. More specifically, it is an object to provide an apparatus for generating a fluidized bed of Geldart C solid particles.

The present invention is defined in the appended independent claims. The dependent claims define advantageous embodiments.

According to an aspect of the invention an apparatus for generating a fluidized bed comprising solid particles mixed with a fluid, is provided.

The apparatus comprises a fluidization compartment having an inner circumferential wall that is rotational symmetric with respect to a central axis and that is extending from a bottom side to an upper side of the fluidization compartment, and wherein the bottom side comprises a fluid distributor for distributing a fluid into the fluidization compartment, and wherein the upper side of the fluidization compartment comprises an opening.

The apparatus further comprises a fluid supply compartment coupled to the bottom side of the fluidization compartment and configured for supplying the fluid to the fluid distributor, and a disengagement compartment comprising a bottom side coupled to the upper side of the fluidization compartment and having an opening matching or at least partly matching with the opening of the upper side of the fluidization compartment such that fluid can flow from the fluidization compartment to the disengagement compartment.

The apparatus also comprises a particle supply configured for supplying the solid particles to the fluidization compartment.

The apparatus of the present disclosure is characterized in that the fluidization compartment is rotatably mounted with respect to the fluid supply compartment and with respect to the disengagement compartment such that the fluidization compartment is rotatable around the central axis while the fluid supply compartment and the disengagement compartment remain stationary.

Advantageously, when compared to prior art static TORBED type reactors, the gas flow rate of the gas supplied to the fluid supply compartment is strongly reduced. Indeed, with the static prior art reactors, the high centrifugal accelerations required to form a fluidized bed, especially for small particles, is imparted by the gas only. With the apparatus of the present disclosure, the circumferential wall of the fluidization compartment together with the fluid distributor are rotating, thereby imparting part of the centrifugal acceleration mechanically.

Advantageously, as the centrifugal acceleration is mechanically imparted by the rotatable fluidization compartment, the gas flow rate to the fluid supply compartment can be dosed to match with the reaction requirements, depending on the specific application of the apparatus.

Advantageously, the life time of the solid particles, i.e. the residence time is increased and is also controllable by adjusting the rotational speed of the rotatable fluidization compartment.

Advantageously, with the apparatus of the present disclosure fluidization beds of small solid particles, e.g. Geldart C solid particles, can be formed. In contrast, with present static swirling type of reactors this is not possible. In these prior art embodiments, the particles to be processed are forced to circulate by tangentially injecting a fluid at high flow rates from the bottom of the fluidization compartment. The problem with these prior art reactors is however, as discussed above, that the swirling component extinguishes rapidly with height, and the bed behaves as a conventional fluidized bed, making it impossible to fluidize Geldart C particles. With the present apparatus due to the required centrifugal acceleration being imparted by the mechanical motion of the fluidization compartment, the height of the fluidization bed is increased.

In embodiments, the rotation of the fluidization compartment with respect to the fluid supply compartment and the disengagement compartment is automated.

In embodiments, the apparatus comprises a drive mechanism configured for driving the rotation of the fluidization compartment. Preferably, the drive mechanism comprises a motor configured for controlling the rotation of the fluidization compartment.

In embodiments, the drive mechanism comprises a controller for controlling a rotational speed of the fluidization compartment.

In embodiments, the apparatus comprises a heating element configured for heating the circumferential wall of the fluidization compartment. Heating can for example be performed by induction or resistive heating.

In embodiments, the upper side of the fluidization compartment is axially delimited by a first wall portion having a central opening defining the opening of the upper side of the fluidization compartment. This wall portion is also named baffle and the baffle helps, when the apparatus is in operation, to hold solid particles in their rotational motion within the fluidization compartment.

In other embodiments, the bottom side of the disengagement compartment is axially delimited by a second wall portion having a central opening defining said opening of the bottom side of the disengagement compartment. In these embodiments, the second wall portion acts as the baffle for maintaining the particles in rotational motion within the fluidization chamber.

In embodiments, the fluid distributor comprises multiple slots configured for distributing the fluid into the fluidization compartment.

In embodiments, the slots of the fluid distributor are configured for distributing the fluid into the fluidization compartment such that when in operation a maximum momentum transfer from the fluid to the solid particles is achieved at a lowest pressure drop between the fluid supply compartment and the disengagement compartment.

In embodiments, the disengagement compartment comprises one or more fluid outlet channels.

In embodiments, the disengagement compartment comprises and one or more supplementary fluid inlet channels allowing to supply fluid to the fluidization compartment from the upper side of the fluidization compartment. Preferably the one or more supplementary fluid inlet channels are configured such that when in operation, a velocity component of the fluid when distributed from the upper side of the fluidization compartment has a velocity component parallel to the central axis Z and a velocity component tangential with respect to the central axis Z.

### Short description of the drawings

These and further aspects of the present disclosure will be explained in greater detail by way of example and with reference to the accompanying drawings in which:
- Fig.1: schematically illustrates an isometric view of a first exemplary embodiment of an apparatus for generating a fluidized bed according to the present disclosure,
- Fig.2: is an exploded view illustrating the main components of a second exemplary embodiment of an apparatus for generating a fluidized bed,
- Fig.3: is an exploded view illustrating the main components of a third exemplary embodiment of an apparatus for generating a fluidized bed,
- Fig.4a and Fig.4b: are exploded views illustrating the main components of a fourth exemplary embodiment of an apparatus for generating a fluidized bed,
- Fig.5: is a schematic drawing illustrating an embodiment of the apparatus of the present disclosure wherein a motor is configured for driving a rotational motion of the fluidization compartment,
- Fig.6: is a schematic drawing illustrating a further embodiment wherein a motor is configured for driving a rotational motion of the fluidization compartment,
- Fig.7: illustrates the cumulative loss of solid particles L as function of time T for a prior art TORBED reactor (curve a) and for an apparatus according to the present disclosure (curve b).

The drawings of the figures are neither drawn to scale nor proportioned. Generally, identical components are denoted by the same reference numerals in the figures.

### Detailed description of embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

### Apparatus

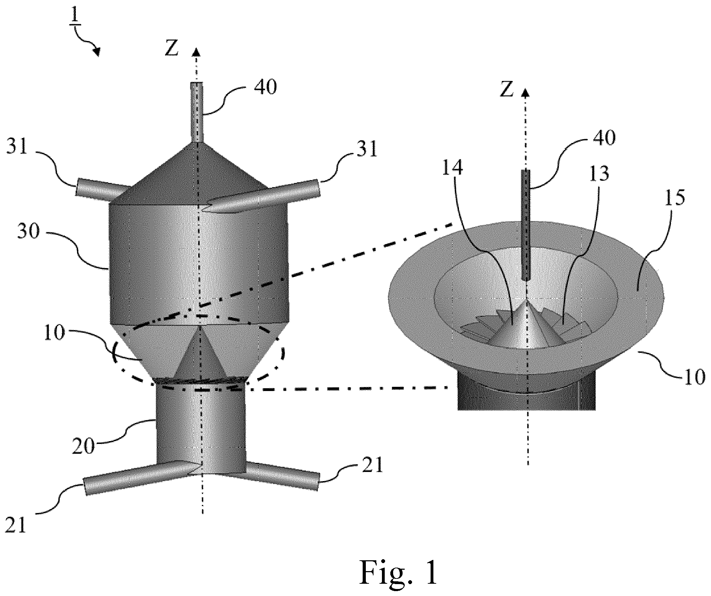

With reference to Figures 1 to 6, illustrations of various exemplary embodiments of the apparatus for generating a fluidized bed according to the present disclosure are shown. Such an apparatus for generating a fluidized bed is generally named a reactor. The apparatus comprises three main components: a fluidization compartment 10, a fluid supply compartment 20 and a disengagement compartment 30.

The fluidization compartment is also known as a processing chamber. It is the compartment where, when the apparatus is in operation, the fluidization bed is formed and retained.

As illustrated on the Figures 1 to 6, the fluidization compartment 10 has an inner circumferential wall that is rotational symmetric with respect to a central axis Z and the inner circumferential wall is extending from a bottom side to an upper side of the fluidization compartment. The bottom and upper side of the fluidization compartment can also be named first and second axial side.

The bottom side of the fluidization compartment comprises a fluid distributor 13 for distributing a fluid into the fluidization compartment 10 and the upper side of the fluidization compartment comprises an opening. In other words, the fluid distributor 13 is for example rigidly attached to the inner circumferential wall of the fluidization compartment 10.

The fluid supply compartment 20 is to be construed as a chamber or a tube segment wherein, when the apparatus is in operation, fluid is flowing towards the fluid distributor 13 of the fluidization compartment 10. The fluid supply compartment 20 is coupled, generally sealingly coupled, to the bottom side of the fluidization compartment 10 and configured for supplying the fluid to be distributed by the fluid distributor. In embodiments, as further discussed below the fluid supply compartment is for example a double-walled tube segment. The fluid supply compartment 20 is generally also named plenum chamber.

The disengagement compartment 30 is to be construed as a chamber or a tube section wherein, when the apparatus is in operation, fluid or a combination of fluid and processed solid particles can escape from the fluidization compartment. Hence, the disengagement compartment 30 is coupled, generally sealingly coupled, to the upper side of the fluidization compartment and the disengagement compartment comprises a bottom side having an opening matching or at least partly matching with the opening of the upper side of the fluidization compartment such that fluid can flow from the fluidization compartment to the disengagement compartment. The bottom side of the disengagement compartment can also be named first axial side of the disengagement compartment.

In order to supply the solid particles, the apparatus further comprise a particle supply 40 configured for supplying the particles to the fluidization compartment.

The apparatus of the present disclosure is characterized in that the fluidization compartment 10 is rotatably mounted with respect to the supply compartment and with respect to the disengagement compartment for rotating around the central axis Z. In this way, the fluidization compartment is rotatable around the central axis Z while the fluid supply compartment 20 and the disengagement compartment 30 remain stationary. In other words, when the apparatus is in operation for forming a fluidized bed, the fluidization chamber is rotating around the central axis Z such that the central axis Z is a rotational axis for the fluidization compartment.

For providing a rotatable interface between the fluidization compartment 10 and both the fluid supply compartment 20 and the disengagement compartment 30, various mechanical solutions can be applied by the person skilled in the art. The present disclosure is not limited to a specific mechanical implementation for making the fluidization compartment rotatable with respect to the fluid supply compartment and the disengagement compartment.

Typically, the apparatus comprises a drive mechanism configured for driving the rotation of the fluidization compartment. Various drive mechanisms known in the art can be considered by the person skilled in the art.

In embodiments, the apparatus comprises for example a first rotary bearing rotatably coupling the fluid supply compartment to the fluidization compartment and a second rotary bearing rotatably coupling the disengagement compartment to the fluidization compartment.

In embodiments, for automating the rotation of the fluidization compartment, the drive mechanism comprises a motor.

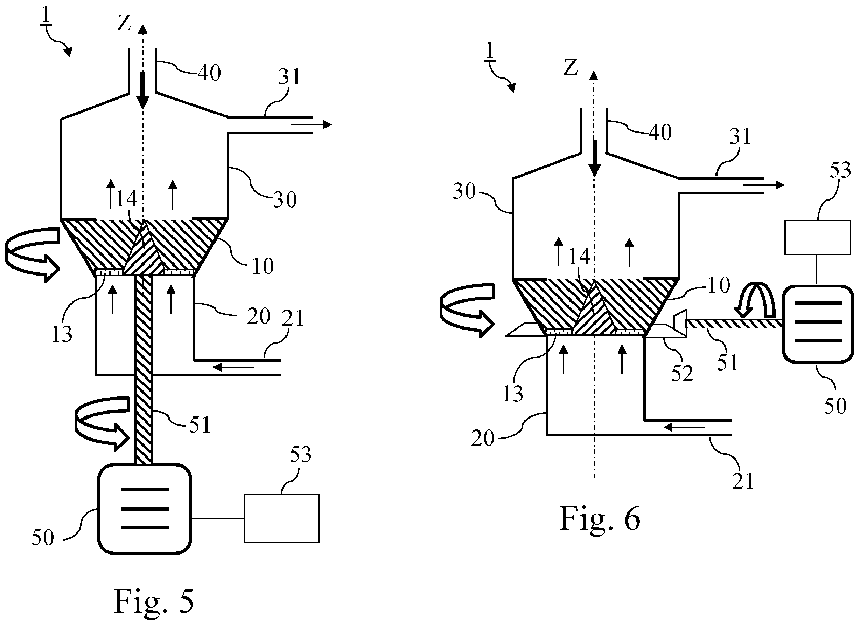

In Fig.5 an example of an embodiment wherein the rotation of the fluidization compartment is motorized is schematically shown. In this embodiments, the drive mechanism comprises a motor 50 and a drive shaft 51 aligned with the central axis Z, and wherein the drive shaft 51 is coupled with a first end with the fluidization compartment 10 and coupled with a second end to the motor 50. The curved arrows on Fig.5 indicate a rotational direction of the fluidization compartment 10 around the central axis Z, while the fluid supply compartment 20 and the disengagement compartment 30 remain stationary.

In Fig.6, a further example of an embodiment wherein the rotation of the fluidization compartment is motorized is shown. In this example, the drive mechanism comprises a gear 52 that is attached to the outer circumferential side of the fluidization compartment and a drive shaft 51 coupled with a first end in a 90° gear configuration with the gear 52 and coupled with a second end to the motor 50.

In embodiments, the apparatus is configured for rotating the fluidization compartment at a rotation speed between 100 rpm (rotations per minute) and 800 rpm.

**In** embodiments, the drive mechanism further comprises a controller 53 configured for controlling a rotational speed of the fluidization compartment. A controller 53 coupled to the motor 52 is schematically shown on Fig.5 and Fig.6. Advantageously, the rotation speed can be adjusted as function of the application making use of the fluidization bed.

Generally, for operating the apparatus according to the present disclosure, the apparatus is positioned such that the central axis Z is parallel or essentially parallel with the local gravity direction.

Making the fluidization compartment rotatable is a major difference when compared to prior art swirling chambers, also known as TORBED reactors, where the fluidization compartment, the fluid supply compartment and the disengagement compartment are stationary. In these embodiments, the particles to be processed are forced to circulate by tangentially injecting a fluid at high flow rates from the bottom of the fluidization compartment. As mentioned above, with the known swirling reactors, the swirling component extinguishes rapidly with height, and the bed behaves as a conventional fluidized bed, making it impossible to fluidize Geldart C particles.

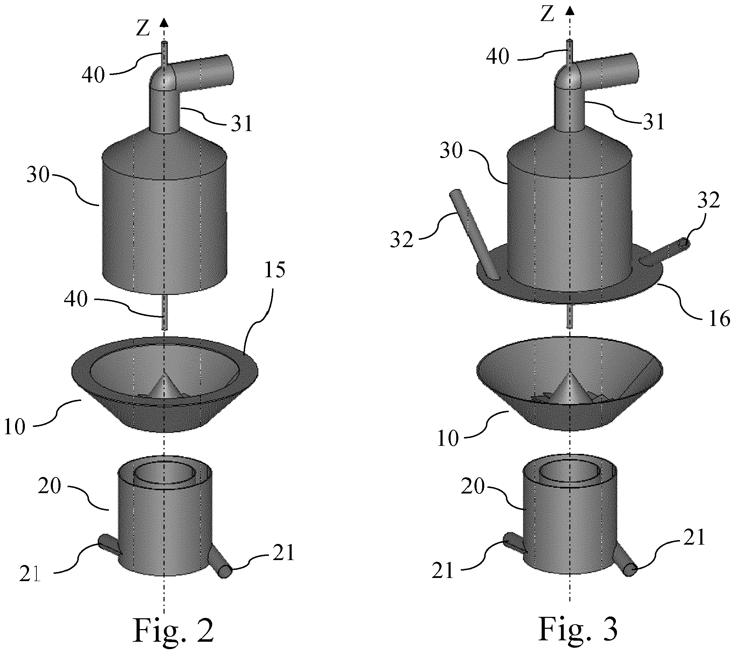

A number of exemplary embodiments of the apparatus of the present disclosure are further discussed in more detail with reference to the various Figures. In Fig.1, an isometric view of a first exemplary embodiment of an apparatus for generating a fluidized bed according to the present disclosure is schematically shown. Not all components of the apparatus are shown, for example the means for rotating the fluidization compartment are not shown on Fig.1 to Fig.4b. In Fig.2 to Fig.4b, exploded views are shown of exemplary embodiments of the apparatus according to the present disclosure.

The fluidization compartment of the embodiment shown on Fig.1, has a shape of a truncated cone wherein a base side and a top side of the truncated cone corresponds to respectively the bottom side and upper side of the fluidization compartment. Hence in these embodiments, the inner circumferential wall of the fluidization compartment is conical.

In the example shown on Fig.1, the upper side of the fluidization compartment 10 is axially delimited by a wall portion 15 having a central opening defining the opening of the upper side of the fluidization compartment. In this example the wall portion 15 is an annular-shaped wall portion. In this example, the annular-shaped wall portion has a flat plate surface perpendicular to the central axis Z.

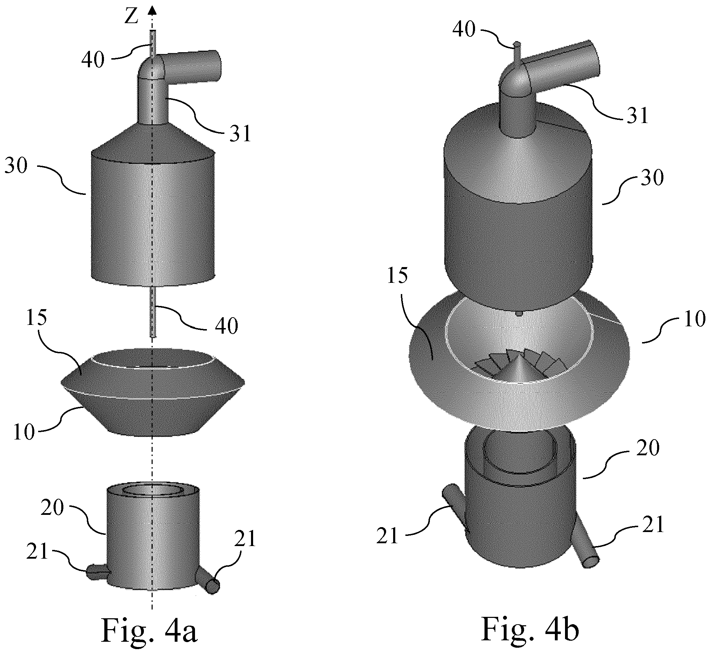

The wall portion 15 axially delimiting the fluidization compartment is however not necessarily a flat surface perpendicular to the central axis Z, as is the case with the embodiments shown on Fig.1 and Fig.2. The wall portion 15 axially delimiting the fluidization compartment can be an inclined wall portion with respect to the central axis Z, for example a conical wall portion as shown on Fig.4a and Fig.4b.

The axial wall portion 15 is also named baffle and helps, when the apparatus is in operation, to hold solid particles in their rotational motion.

In other embodiments, as shown on Fig.3, the upper side of the fluidization compartment 10 is fully open, and, in this embodiment, the bottom of the disengagement compartment 30 comprises an annular-shaped wall portion 15 acting as a baffle.

In embodiments, as illustrated on Fig.1, the fluidization compartment 10 comprises a central element 14 that is configured for reducing a central volume of the fluidization compartment. Generally, the central element 14 has an axis of rotational symmetry coinciding with the central axis Z. In embodiments, the central element 14 has for example a conical shape. The central zone of a fluidization compartment is a zone where no or few gas is circulating and hence placing such a central element 14 in the fluidization compartment does not influence the fluidization bed that is more located at an outer periphery within the fluidization compartment.

In embodiments, the central element 14 cooperates with the particle supply 40 for guiding the solid particles into the fluidization bed. For example, as illustrated on Fig.1 to Fig.6, the particle supply 40 comprises a tube portion traversing through a wall of the disengagement compartment 30. The tube portion is positioned such that solid particles supplied through the tube portion are falling by gravity on the central element 14, e.g. a conical element, and these particles are then further guided towards the fluidization bed. Preferably, the tube portion is parallel with the central axis Z.

In embodiments, the fluid distributor 13 comprises multiple slots configured for distributing the fluid into the fluidization compartment. Generally, the slots are configured for distributing the fluid into the fluidization compartment such that a maximum momentum transfer from the fluid to the solid particles is achieved at a lowest pressure drop. The pressure drop is hereby defined as the difference in pressure between the fluid supply compartment and the disengagement compartment.

In embodiments, as illustrated on Fig.1, the fluid distributor 13 comprises a plurality of blades. Generally, the blades of the fluid distributor are inclined with respect to a plane perpendicular to the central axis Z such that a velocity of the fluid entering the fluidization compartment has a velocity component parallel to the central axis and a velocity component tangential with respect to the central axis.

In embodiments, the blades are inclined by an angle of 10° with respect to a plane perpendicular to the central axis Z.

In other embodiments, the distributor comprises a single disk with trapezoidal or cylindrical channels for fluid distribution.

In embodiments, the distributor is rotationally symmetric with respect to the central axis Z.

Generally, when the apparatus is in operation and a fluidization bed is generated, a portion of the fluid that is continuously distributed into the fluidization compartment is also continuously extracted through the disengagement compartment. Hence, in embodiments, the disengagement compartment 30 comprises one or more fluid outlet channels 31. For example on Fig.1, two outlet channels are shown tangential with respect to the central axis Z. Also the embodiments shown on Fig.5 and Fig.6 comprise a disengagement compartment 30 with an outlet channel 31, and the arrow illustrates fluid flowing out of the disengagement compartment through the outlet channel 31.

The outlet channels 31 of the disengagement channels are not necessarily tangential with respect to the central axis Z. For example, in the embodiments shown on Fig.2 to Fig.4b, the disengagement compartment 30 comprises one outlet channel 31 comprising a tube portion parallel with the central axis Z.

In some embodiments, the processed solid particles are removed together with the fluid through the one or more outlet channels 31 of the disengagement compartment 30.

In other embodiments, a dedicated particle outlet can be provided in the bottom side of the fluidization compartment, e.g. a centrally located particle outlet.

In embodiments, as illustrated on Fig.3, the disengagement compartment 30 comprises one or more supplementary fluid inlet channels 32 allowing to supply the fluid from the upper side of the fluidization compartment. The one or more supplementary fluid inlet channels 32 are configured such that when in operation, a velocity component of the fluid distributed from the upper side of the fluidization compartment has a velocity component parallel to the central axis Z and a velocity component tangential with respect to the central axis Z. These supplementary fluid inlet channels 32 are located near the axially delimiting wall portion 15 forming a baffle, as discussed above.

**In** embodiments, one or more of the supplementary fluid inlet channels 32 can also be used to supply the solid particles to the fluidization compartment. Hence, in these embodiments, the particle supply 40 corresponds to one or more of the supplementary fluid inlet channels 32.

In embodiments, as illustrated on Fig.1 to Fig.4b, the fluid supply compartment 20 comprises one or more fluid inlet channels 21. In these examples two fluid inlet channels are shown. In Fig.5, a fluid inlet channel 21 for the fluid compartment is shown wherein the horizontal arrow indicates a direction of an incoming fluid flow.

In embodiments, the one or more inlet channels of the fluid supply compartment are configured for generating a swirling fluid flow within the fluid supply compartment. In this way, when the fluid reaches the fluid distributor the fluid has a tangential velocity component.

In embodiments, the fluid supply compartment 20 comprises a double-walled tube segment, as illustrated on Fig.2 to Fig.4b, and the fluid inlet channels are configured for supplying the fluid in the cavity formed between an inner and an outer wall of the double-walled tube segment.

The inner tube portion formed by the inner wall of the double-walled tube segment of the fluid supply compartment 20 allows to have access to the bottom side of the fluidization compartment. In embodiments, the inner tube portion can be used to for example provide for a heating element to heat the bottom side of the fluidization compartment. In embodiments, a direct flame can be used for heating the bottom side of the fluidization compartment.

In embodiments wherein the central element 14 is a hollow cone, by providing for example a direct flame in the inner tube portion formed by the inner wall of the double-walled tube, the conical central element 14 of the fluidization compartment can be heated.

In embodiments, not only the bottom side of the fluidization compartment is heated but also the circumferential side is heated. For example, heating elements can be provided for heating the circumferential wall of the fluidization compartment. Heating can for example be performed by induction heating or by resistive heating.

In some embodiments, as illustrated on Fig.5, the inner tube portion of the double walled tube segment forming the fluid supply compartment 20 can be used to insert a driving shaft 51 for driving the rotation of the fluidization compartment.

### Performances

Performances of the apparatus of the present disclosure are significantly better when compared with the static TORBED type reactor chambers, especially in terms of residence time of the solid particles.

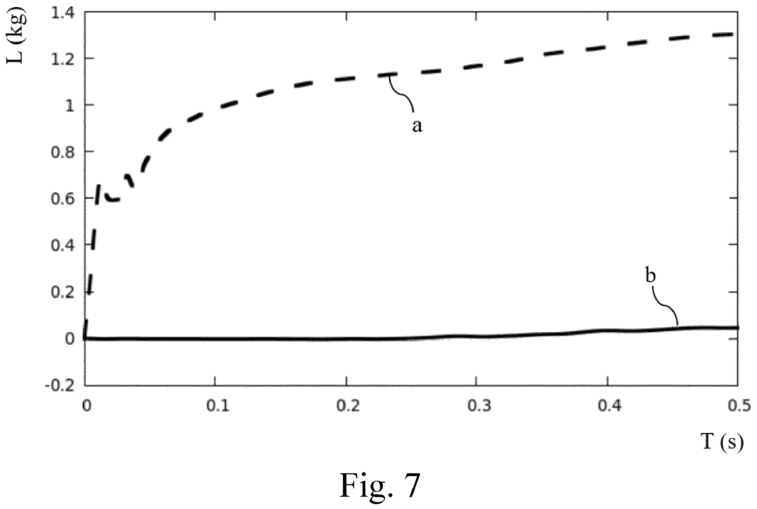

In Fig.7, the cumulative loss of solid particles L, expressed in kg, is plotted as function of time T, expressed in seconds, for two reactor types: curve a is for a static TORBED type reactor and curve b is obtained with an apparatus according to the present disclosure. The comparison study was done for 30 micrometer particles. As schematically illustrated, there is huge difference in terms of particle loss. With the static reactor, curve a, after 0.5 seconds the cumulative particle loss has reached a plateau of about 1.3 kg which corresponds to the particle weight that was present in the fluidization chamber at the start of the simulation. In other words, the TORBED type-reactor is completely empty after 0.5 seconds due to gas entrainment. To the contrary, with the present apparatus having a rotating fluidization compartment, the vast majority of the solid bed particles are still present even after an extended period of time. As illustrated, with the apparatus according to the present disclosure, i.e. curve b, after 0.5 seconds, the particle loss is very small when compared to the TORBED type-reactor illustrated with curve a. In the present example, the fluidization compartment was rotating at a rotation speed of 200 rpm.

**Reference numbers**

| | |
|---|---|
| 1 | Apparatus for generating a fluidized bed |
| 10 | Fluidization compartment |
| 13 | Fluid distributor |
| 14 | Volume-reducing element |
| 15 | First wall portion |
| 16 | Second wall portion |
| 20 | Fluid supply compartment |
| 21 | Fluid inlet channel |
| 30 | Disengagement compartment |
| 31 | Fluid outlet channel |
| 32 | Supplementary fluid inlet channel |
| 40 | Particle supply |
| 50 | motor |
| 51 | driving shaft |
| 52 | gear |
| Z | Central axis |

## Claims

1. An apparatus (1) for generating a fluidized bed comprising solid particles mixed with a fluid, the apparatus comprising:
a) a fluidization compartment (10) having an inner circumferential wall that is rotational symmetric with respect to a central axis (Z) and that is extending from a bottom side to an upper side of the fluidization compartment, and wherein the bottom side comprises a fluid distributor (13) for distributing a fluid into the fluidization compartment, and wherein the upper side of the fluidization compartment comprises an opening,
b) a fluid supply compartment (20) configured for supplying the fluid to the fluid distributor (13),
c) a disengagement compartment (30) comprising a bottom side having an opening matching or at least partly matching with the opening of the upper side of the fluidization compartment such that fluid can flow from the fluidization compartment to the disengagement compartment,
d) a particle supply (40) configured for supplying the solid particles to the fluidization compartment,
**characterized in that** said fluidization compartment (10) is rotatably mounted with respect to the fluid supply compartment and with respect to the disengagement compartment such that the fluidization compartment is rotatable around said central axis (Z) while the fluid supply compartment (20) and the disengagement compartment (30) remain stationary.

2. An apparatus according to claim 1 comprising a drive mechanism configured for driving the rotation of the fluidization compartment (10), and wherein the drive mechanism comprises a motor (50).

3. An apparatus according to claim 2 wherein said drive mechanism comprises a controller configured for controlling a rotational speed of the fluidization compartment.

4. An apparatus according to claim 2 or claim 3 wherein the drive mechanism comprises a first rotary bearing rotatably coupling the fluid supply compartment to the fluidization compartment and a second rotary bearing rotatably coupling the disengagement compartment to the fluidization compartment.

5. An apparatus according to any of previous claims wherein the upper side of the fluidization compartment (10) is axially delimited by a first wall portion (15) having a central opening defining said opening of the upper side of the fluidization compartment and/or wherein the bottom side of the disengagement compartment is axially delimited by a second wall portion (16) having a central opening defining said opening of the bottom side of the disengagement compartment.

6. An apparatus according to any of previous claims wherein said fluidization compartment (10) has a shape of a truncated cone wherein a base side and a top side of the truncated cone corresponds to respectively said bottom side and upper side of the fluidization compartment.

7. An apparatus according to any of previous claims wherein the fluidization compartment comprises a central element configured for limiting a volume of the fluidization compartment, preferably the central element has an axis of rotational symmetry coinciding with said central axis (Z).

8. An apparatus according to claim 7 wherein said central element (14) has a conical shape.

9. An apparatus according to any of previous claims wherein said fluid distributor (13) comprises multiple slots configured for distributing the fluid into the fluidization compartment (10), preferably said slots are configured for distributing the fluid into the fluidization compartment such that when in operation a maximum momentum transfer from the fluid to the solid particles is achieved at a lowest pressure drop between the fluid supply compartment and the disengagement compartment.

10. An apparatus according to any of previous claims wherein said fluid distributor comprises a plurality of blades, or alternatively said fluid distributor comprises a single disk with trapezoidal or cylindrical channels for fluid distribution.

11. An apparatus according to claim 10 wherein said blades are inclined with respect to a plane perpendicular to the central axis (Z) such that a velocity of the fluid entering the fluidization compartment has a velocity component parallel to the central axis and a velocity component tangential with respect to the central axis.

12. An apparatus according to any of previous claims wherein said particle supply (40) comprises a tube portion traversing through a wall of said disengagement compartment, preferably said tube portion is parallel with said central axis (Z).

13. An apparatus according to any of previous claims wherein said disengagement compartment (30) comprises one or more fluid outlet channels (31).

14. An apparatus according to any of previous claims wherein said fluid supply compartment (20) comprises one or more fluid inlet channels (21), preferably said one or more inlet channels are configured for generating a swirling fluid flow within the fluid supply compartment.

15. An apparatus according to any of previous claims wherein said disengagement compartment (30) comprises one or more supplementary fluid inlet channels (32) allowing to supply fluid to the fluidization compartment from the upper side of the fluidization compartment, preferably the one or more supplementary fluid inlet channels (32) are configured such that when in operation, a velocity component of the fluid when distributed from the upper side of the fluidization compartment has a velocity component parallel to the central axis Z and a velocity component tangential with respect to the central axis Z.
